Europäisches Patentamt

European Patent Office

Office européen des brevets

(11) Publication number: **0 542 726 A1**

## EUROPEAN PATENT APPLICATION

(21) Application number: **93200028.4**

(22) Date of filing: **24.05.90**

(51) Int. Cl.5: **C08F 10/00**, C08F 2/38,
C08F 4/16

This application was filed on 06 – 01 – 1993 as a divisional application to the application mentioned under INID code 60.

(30) Priority: **27.05.89 GB 8912271**

(43) Date of publication of application:
**19.05.93 Bulletin 93/20**

(60) Publication number of the earlier application in accordance with Art.76 EPC: **0 400 905**

(84) Designated Contracting States:
**BE DE FR GB**

(71) Applicant: **BP Chemicals Limited**
**Belgrave House 76 Buckingham Palace Road**
**London, SW1W 0SU(GB)**

(72) Inventor: **Miln, Colin Douglas**
**BP Chemicals Limited, Bo'ness Road**
**Grangemouth, Stirlingshire FK3 9XH(GB)**

(74) Representative: **Krishnan, Suryanarayana**
**Kalyana et al**
**BP INTERNATIONAL LIMITED Patents &**
**Agreements Division Chertsey Road**
**Sunbury–on–Thames Middlesex TW16 7LN**
**(GB)**

(54) **Cationic polymerisation of 1–olefins.**

(57) This invention relates to a liquid phase process for the cationic polymerisation of a feedstock comprising 1–olefins to an olefin polymer in the presence of a catalyst composition comprising tin tetrachloride catalyst at a temperature from −100 to +50°C wherein the catalyst is activated by a co–catalyst selected from tertiary butyl chloride and water.

The process yields a high vinylidene polymer when using feeds containing isobutene.

Rank Xerox (UK) Business Services
(3.10/3.6/3.3.1)

The present invention relates to a process for cationic polymerisation of 1 − olefins to an olefin polymer, and in particular to producing polyisobutenes which have a relative high degree of vinylidene groups.

Isobutene is a typical example of a 1 − olefin. Methods of polymerising 1 − olefins, e.g. isobutenes whether pure or in an isomeric mixture as in a $C_4$ raffinate, using a Friedel − Crafts type catalyst are well − known. Typical of such catalysts are the halides of aluminium, iron, zinc, titanium, mercury and boron. These catalysts have also been used in conjunction with small amounts of co − catalysts such as water, alcohol, sulphur dioxide, carboxylic acids, mineral acids, ethers and alkyl halides to enhance catalyst activity. The reaction has been carried out in the liquid or gaseous phases, batchwise or continuously, at temperatures ranging from − 100° to + 100° C.

It is also known that the polymerisation of 1 − olefins e.g. isobutene using a Friedel − Crafts type catalyst is a cationic process which proceeds through formation of intermediate carbonium ions.

The product of this reaction is generally a mixture of polymers which have the unsaturated linkage in the terminal or internal position within the polymer. Conventional cationic processes generally yield a polymer with a relatively high proportion of internal unsaturation compared with polymers having vinylidene groups. This is due to the "in situ" isomerisation of the unsaturated linkage to an internal position and is inherent in most cationic polymerisation processes. Internal unsaturation in olefin polymers is believed to be less desirable than terminal unsaturation of the vinylidene type because of the relatively lower chemical reactivity of internally unsaturated polymers when compared with polymers having vinylidene groups. This is especially true of the reactivity towards compounds such as maleic anhydride which forms an adduct with polyisobutene called polyisobutenyl succinic anhydride (PIBSA). These adducts are most valuable products and form the basis of the lubricating oil additives industry.

Of the cationic polymerisation catalysts used higherto those containing boron trifluoride are known for their tendency to isomerise the unsaturation in the polymer product to an unreactive internal position. For instance, Puskas, I. et al in Journal of Polymer Science, Symposium No. 56. pp 191 − 202 (1976) have reviewed the relative effects of catalysts such as boron trifluoride and complexes thereof with co − catalysts such as acetic acid and water. In this article, the authors indicate that up to 40% vinylidene (i.e. termimal) unsaturation can be obtained with a contact time of 5 − 7 minutes. They conclude however that the longer the contact time the greater is the tendency for the vinylidene unsaturation in the polymer to be isomerised to a unreactive internal position.

This view also appears to be confirmed indirectly in an article by Mullin, M.A. et al in Khim i Tekhnol. Topliv i masel, vol 10, pp 23 − 26 (October 1965) in which a complex of boron trifluoride with methanol or a mixture of methanol and ethanol is disclosed as a catalyst for polymerising isobutene. This article discloses a very short contact time of 30 − 40 seconds which is indicative of the care necessary when using this catalyst.

The criticality of a short time in relation to the use of boron trifluoride catalyst for polymerising isobutene is also emphasised in GB 1592016 and EP − A − 16312. The latter publication advocates vigorous control of contact time and catalyst concentration and stresses the need to have a contact time of below 40 seconds to avoid isomerisation of the double bonds.

In USP 3066123 (ESSO) it is stated (in col.1, line 33 − 34 and col.2, line 8 − 15) that Friedel Crafts catalysts such as $SnCl_4$ when employed alone are completely ineffective in Ziegler type catalysis for polymerising olefins such as isobutylene. This patent goes on to state (col.2, line 16 − 18) that the activating material "must" be an aluminium alkyl compound which has been found to be "absolutely essential" in the combination although ineffective alone.

This view is further substantiated in an authoritative text by Kennedy, J P and Gillham, J K in Advances in Polymer Science vol 10, 1972, p.4 where they state that "Minckler et al (11,12) successfully used Al − $(C_2H_5)_3$ to activate such conventional Friedel − Crafts catalysts as $SnCl_4$ which alone is inactive for isobutylene polymerisation and propylene oligomerisation".

It has now been found that a product predominating in terminal unsaturation of the vinylidene type can be formed by using $SnCl_4$ as catalyst without an activating agent such as an aluminium alkyl (halide).

Accordingly, the present invention is a liquid phase process for the cationic polymerisation of a feedstock comprising 1 − olefins in the presence of a catalyst composition comprising tin tetrachloride catalyst at a temperature from − 100 to + 50° C characterised in that the catalyst is activated by a co − catalyst which is water.

The term 'polymerisation' as used herein is intended to cover oligomerisation and the process is particularly suited to the production of oligomers such as dimers and trimers, and low molecular weight polymers of 1 − olefins wherein the number average molecular weight (Mn) of the polymer may be from 100 to 15,000.

The hydrocarbon feedstock may be pure 1−olefin or a mixed feed containing the 1−olefin. 1−olefin feedstock containing 4 to 16 carbon atoms is preferred. If a pure olefin is used, which is gaseous under ambient conditions, it is necessary either to control the reaction pressure and/or temperature, or to dissolve the olefin in a solvent medium inert under the reaction conditions in order to maintain the olefin in the liquid phase. In the case of isobutene which is typical of 1−olefins, the feedstock used in the polymerisation process may be pure isobutene or a mixed $C_4$ hydrocarbon feedstock such as that resulting from the thermal or catalytic cracking operation conventionally known as a butadiene raffinate (hereafter BDR). This is a liquid when under pressure and hence no diluent is needed. The feedstock used may suitably contain between 10 and 100% by weight of isobutene. It is preferable to use a feedstock containing at least 15% by weight of isobutene and most preferably at least 40% by weight of isobutene. The hydrocarbon feedstock used may contain in addition to isobutene between 10 and 20% by weight of butanes and/or between 20 and 40% by weight of normal butenes without adverse effect on the polyisobutene product.

The catalyst is tin tetrachloride (hereafter TTC) activated by a co−catalyst which is water.

No claim is made herein to catalyst compositions containing any alkyl aluminium (halide) of the type $R_nAlX_{3−n}$ where n = 0 to 3 in addition to the TTC and co−catalyst.

In the catalyst compositions of the present invention the molar ratio of TTC to the co−catalyst is suitably from 10:1 to 1:3, preferably from 7:1 to 1:2 and most preferably from 5:1 to 1:1.

Catalyst and co−catalyst components used in the present invention may be prepared by conventional techniques or can be bought commercially as proprietary products. However, it is desirable to analyse any commercial products to ensure adequate control of the concentrations of the relevant components in the polymerisation reaction.

The components so formed are then diluted with a solvent inert under the reaction conditions, e.g. dichloromethane or n−heptane. When water is used as the co−catalyst no solvent is required for this component.

The polymerisation reaction is carried out in the liquid phase. The catalyst components are suitably introduced into the polymerisation reactor as a solution thereof in a solvent which is inert under the reaction conditions. The use of a solvent for the catalyst components is only necessary to ensure a more effective control of the concentration of the catalyst composition. The catalyst and cocatalyst solutions can either be added simultaneously or sequentially, preferably simultaneously, into the polymerisation reaction. However, it is possible to use the neat components of the catalyst composition as such. Examples of suitable solvents include primary and secondary alkyl halides and aliphatic, alicyclic and cycloaliphatic hydrocarbons. Dichloromethane and n−heptane are typical examples of the solvent.

One of the surprising features of the present invention is that in spite of using TTC as a catalyst component, there is no need to use a catalyst such as aluminium alkyl (halide), hitherto believed to be essential in such a system, to achieve polymerisation. It is even more surprising that the product of the polymerisation reaction, especially in the case of polybutenes (whether poly−n−butene, polyisobutene or mixtures thereof), has an average vinylidene unsaturation content of at least 75%, which is the most desirable distribution. This is a significant feature because such a polymer is easy to react efficiently e.g. with maleic anhydride.

The polymerisation reaction is suitably carried out at a temperature between −50 and +45°C, preferably between −20 and 40°C. The reaction may be carried out at a pressure in the range of 0.4 to 4 bar absolute. The process of the present invention is particularly suitable for producing polyisobutenes having a molecular weight of between 500 and 5000, even more preferably those having a molecular weight of between 750 and 3500. The significantly high proportion of terminal unsaturation in the polymers so produced are particularly suited for producing adducts with maleic anhydride which are eventually converted to the imides by reaction with appropriate amines for use as additives to lubricating oils.

The process of the present invention may be operated batchwise or continuously.

The present invention is further illustrated with reference to the following Examples.

Feedstock Composition

| Component | % |
|---|---|
| Isobutane | 3.87 |
| n – Butane | 16.97 |
| Butene – 1 | 21.93 |
| Isobutene | 41.67 |
| cis – Butene – 2 | 10.6 |
| trans – Butene – 2 | 4.96 |

Catalyst Preparation – General Method

The desired amount of anhydrous catalyst is added to a standard flask which has been purged with nitrogen ($N_2$). Solvent (either dry n – heptane or dry dichloromethane) is then added in the required amount to produce a standard solution. Both catalyst and co – catalyst are prepared in this manner.

General Polymerisation Procedure

The reactor system used was a batch reactor and consisted of a sealed flask provided with means for stirring, and inlets for the reactant olefin to be polymerised, the catalyst components and for an inert gas to be introduced into the system. The system was also provided with a means for controlling and for measuring the reaction temperature.

Having assembled the appropriate system, a continuous nitrogen purge was introduced and remained throughout the reaction. Solvent (either dry n – heptane or dry dichloromethane), $500cm^3$, was added to the reactor followed by BDR feedstock added as a liquid from a pressurised bomb.

Once equilibration of the system had occurred and a constant temperature produced, catalyst and co – catalyst were then added separately at a controlled rate over a twenty minute period. Temperature was monitored consistently throughout this addition. A further ten minutes reaction time was then allowed.

Following this period, the reaction was terminated by using catalyst poison consisting of approximately $150cm^3$ of a 1:1 volume ratio of 0.88M ammonia solution in water was added. The work – up procedure consisted of three washings with water (total volume approximately $500cm^3$), followed by removal of the organic layer.

The organic layer was first filtered using 1.2micrometer glass fibre paper filters and then heated under reduced pressure to remove solvent (10mmHg, 130˚C) and light polymer (1mmHg, 220˚C).

Example 1

This Example involved the use of tin tetrachloride and tap water to give a polybutene having a vinylidene content of 90% with a 32% conversion as shown in Table 1 below:

Catalyst preparation :     0. 987M solution of tin tetrachloride in dry n – heptane was added.

Co – catalyst preparation:     Water was added neat.

Reaction method :     Dichloromethane was used as the reactor solvent. Water was added prior to the addition of the BDR feedstock in one single injection 156g of BDR was added.

Feedstock Analysis :     As shown previously.

The change of temperature with time is indicated below:

| Time/Minutes | Reactor Temperature/°C | Total volume of catalyst solution added/cm$^3$ |
|---|---|---|
| 0 | 5 | 0 |
| 5 | 6 | 3.0 |
| 10 | 7 | 11.0 |
| 15 | 9 | 18.0 |
| 20 | 11 | 21.0 |
| 25 | 13 | 21.0 |
| 30 | 15 | 21.0 |

Comparative Test 1 (Not according to the invention)

This Test was carried out under the same conditions as in Example 1 above except that TiCl$_4$ was used as catalyst and there were minor differences in concentrations or conditions used. These differences together with the results achieved are shown in Table 1 below.

Comparative Test 2 (Not according to the invention)

This Test was carried out under the same conditions as in Example 1 above except that TiCl$_4$ was used as the catalyst and no solvent was used either with the catalyst or co − catalyst. This and any other minor variations together with the results achieved are shown on Table 1 below.

Comparative Test 3 (Not according to the invention)

This Test was carried out under the same conditions as in Comparative Test 1 above except that trichloroacetic acid was used as co − catalyst in dry n − heptane. These variations and the results achieved are shown in Table 1 below.

The results of all the above Examples and Comparative Tests are tabulated in Table 1 below. In the Table

$$\% \text{ Conversion} = \frac{\text{Mass Polymer Obtained}}{\text{Mass of BDR fed} \times 41.67\%} \times 100$$

CT = Comparative Test (not according to the invention)

The change of temperature with time is indicated below:

| Time/minutes | Reactor Temperature/°C | Bath Temperature/°C | Total volume of Catalyst solution added | Total volume of Cocatalyst solution added |
|---|---|---|---|---|
| 0 | -20 | -20 | 0cm$^3$ | 0cm$^3$ |
| 5 | -20 | -20 | 4.5 | 8.0 |
| 10 | -19 | -19 | 8.5 | 10.5 |
| 15 | -16 | -19 | 14.5 | 16.2 |
| 20 | -14 | -20 | 18.0 | 21.0 |
| 25 | -11 | -18 | 21.0 | 21.0 |
| 30 | -11 | -20 | 21.0 | 21.0 |

Table 1

| No. | Catalyst | Catalyst Solvent (Molarity) | Catalyst (Moles) | Co-catalyst | Co-catalyst Solvent (Molarity) | Co-catalyst (Moles) | Mass of BDR Added (g) | Initial Reactor Temp. °C | Solvent | Conv. % | Mol Wt (Mn) | % Vinylidene in polymer |
|---|---|---|---|---|---|---|---|---|---|---|---|---|
| 1 | $SnCl_4$ | Dry n-heptane (0.987) | 0.021 | $H_2O$ | None | 0.003 | 156 | 5* | $CH_2Cl_2$ | 32 | 972 | 90 |
| CT1 | $TiCl_4$ | Dry n-heptane (0.962) | 0.019 | TBC | $CH_2Cl_2$ (1.026) | 0.021 | 357.1 | 9 | $CH_2Cl_2$ | 12 | 1270 | 60 |
| CT2 | $TiCl_4$ | None | 0.027 | $H_2O$ | None | 0.003 | 204.0 | 14* | Dry n-heptane | 36 | 1898 | 55 |
| CT3 | $TiCl_4$ | Dry n-heptane (0.997) | 0.030 | $CCl_3CO_2H$ | Dry n-heptane (1.000) | 0.030 | 270.4 | 15* | Dry n-heptane | 19 | 1301 | 50 |

* This recorded temperature was taken prior to the addition of the B.D.R. feedstock.

## Claims

1. A liquid phase process for the cationic polymerisation of a feedstock comprising 1 – olefins to an olefin polymer in the presence of a catalyst composition comprising tin tetrachloride catalyst at a temperature from $-100$ to $+50\,^{\circ}$C characterised in that the catalyst is activated by a co$-$catalyst which is water.

2. A process according to Claim 1 wherein the 1$-$olefin feedstock has 4$-$16 carbon atoms.

3. A process according to Claim 1 or 2 wherein the olefin feedstock comprises isobutene.

4. A process according to any one of the preceding Claims wherein the olefin feedstock is a butadiene raffinate.

5. A process according to any one of the preceding Claims wherein the catalyst composition comprises tin tetrachloride and water and the molar ratio of the catalyst to cocatalyst in the catalyst composition is from 10:1 to 3:1.

6. A process according to any one of the preceding Claims wherein the catalyst composition is free of any alkyl aluminium (halide) of the type $R_nAlX_{3-n}$ where $n = O$ to 3.

7. A process according to any one of the preceding Claims wherein the reaction temperature is from $-50$ to $+45\,^{\circ}$C.

8. A process according to any one of the preceding Claims wherein the reaction is carried out at a pressure from 0.4 to 4 bar absolute.

9. A process according to any one of the preceding Claims wherein the olefin polymer from a feedstock comprising isobutene has an average vinylidene content of at least 75%.

10. A process according to any one of the preceding Claims wherein the olefin polymer has a number average molecular weight (Mn) from 100 to 15000.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 224 759 (BAYER)<br>* the whole document * | 1-10 | C08F10/00<br>C08F2/38<br>C08F4/16 |
| A | US-A-3 342 883 (T. V. LISTON)<br>* the whole document * | 1-10 | |

TECHNICAL FIELDS
SEARCHED (Int. Cl.5)

C08F

The present search report has been drawn up for all claims

| Place of search | Date of completion of the search | Examiner |
|---|---|---|
| THE HAGUE | 25 FEBRUARY 1993 | PERMENTIER W.A. |

EPO FORM 1503 03.82 (P0401)